# EUROPÄISCHE PATENTSCHRIFT

(11) **EP 0 507 046 B1**
(45) Veröffentlichungstag und Bekanntmachung des Hinweises auf die Patenterteilung: **18.01.1995**
(21) Anmeldenummer: 92101126.8
(22) Anmeldetag: 24.01.1992
(51) Int. Cl.: C04B 18/02, C04B 14/30, C09C 1/24, C09C 3/04

(54) **Verfahren zum Einfärben von Baustoffen**
Process for colouring building materials
Procédé pour coloration de matériaux de construction

(30) Priorität: 06.02.1991 DE 4103531
(43) Veröffentlichungstag der Anmeldung: 07.10.1992
(73) Patentinhaber: BAYER AG, 51368 Leverkusen (DE)
(72) Erfinder: Kröckert, Bernd, Dr., W-4230 Wesel (DE); Linde, Günter, Dr., W-4150 Krefeld (DE); Eitel, Manfred, Dr., W-4150 Krefeld (DE); Schäfer, Kurt, Dr., W-4150 Krefeld (DE); Rohbock, Klaus, Dr., W-4152 Kempen (DE)

(56) Entgegenhaltungen:
- EP-A- 0 365 046
- EP-A- 0 396 975
- EP-A- 0 482 450
- DE-A- 2 723 221
- FR-A- 2 438 073
- SPRECHSAAL. Bd. 121, Nr. 2, Februar 1988, COBURG DE Seiten 126 - 129; DR. G.HEINZE: 'Neue Granuliertrommel für die Aufbauagglomeration'

## Beschreibung

Die vorliegende Erfindung betrifft ein Verfahren zum Einfärben von Baustoffen mit anorganischen Pigmenten in Form von gut fließenden und nicht staubenden Granulaten.

Zement- und kalkgebundene Baustoffe wie Putze, Kalksandsteine, Faserzementteile oder Betonwerksteine, insbesondere Dach- und Pflastersteine sowie Gehwegplatten, werden in der Regel, wenn sie farbig gestaltet werden sollen, mit anorganischen Pigmenten eingefärbt. So ist es allgemein in der Baustoffindustrie üblich, Eisenoxide oder Eisenoxidhydroxide als Rot-, Schwarz-, Braun- oder Gelbpigmente, Manganoxide als Braunschwarzpigmente, Chromoxide als Grünpigmente und Titandioxide als Weißpigmente einzusetzen. Als weitere Beispiele können Ruße als Schwarzpigmente, Nickel- oder Chromrutile als Gelbpigmente und kobalthaltige Spinelle als Blau- und Grünpigments, kupferhaltige Spinelle als Schwarzpigmente sowie die Mischkristalle aus Bariumsulfat und Bariummanganat als Blaupigmente genannt werden.

Zur Einfärbung von Betonwaren werden normalerweise die Pigmente im pulverförmigen Zustand eingesetzt. Sie haben in gemahlener Form den Vorteil der guten Dispergierbarkeit. Die vollständig homogene Verteilung solcher Pigmentpulver erfolgt in Betonmischungen in einer kurzen Zeit - bis zu wenigen Minuten. Der Nachteil dieser feinen Pulver besteht darin, daß sie kein gutes Fließverhalten aufweisen und sich beim Lagern häufig zusammenballen und verklumpen. Die genaue Dosierung wird hierdurch erschwert. Ein weiterer Nachteil einiger Pulver besteht darin, daß sie zum Stauben neigen.

Es ist bekannt, daß diese Nachteile bei der Pigmentierung von Betonteilen vermieden werden können, indem man anstelle trockener Pigmentpulver wässrige Pigmentsuspensionen einsetzt. Die Verwendung derartiger 30 bis 70 Gew.-% Pigment enthaltenden Pasten oder Slurries hat sich nur zögernd durchsetzen können. Denn durch den zusätzlichen Wassergehalt können je nach Entfernung von Herstell- und Einsatzort erheblich höhere Transportkosten auftreten. Auch kann die mitgelieferte große Wassermenge nicht in jeder Betonzubereitung verarbeitet werden.

Die Baustoffindustrie ist deshalb größtenteils bei dem Einsatz trockener Pigmentpulver geblieben. Der Verwendung von Pigmenten in Form von Mikrogranulaten, wie es aus der Kunststoff- und Lackindustrie bekannt ist, stand bisher die Meinung entgegen, Granulate seien in Betonzubereitungen weniger gut dispergierbar. Schwer dispergierbare Pigmentagglomerate erfordern wesentlich längere Mischzeiten. Bei der normalen, in der Baustoffindustrie üblichen kurzen Mischzeit treten infolge schlechter Pigmentverteilung an der Betonoberfläche Stippen, Streifen oder Farbnester auf. Die im Pigment enthaltene Farbstärke kann sich nicht entfalten, so daß bei gleicher Farbintensität des Betonwerkstückes größere Pigmentmengen aufgewendet werden müssen.

In der DE-C 3 619 363 werden für die Einfärbung von Betonwaren Pigmentgranulate beschrieben, die im wesentlichen aus Pigment und einem oder mehreren die Dispergierung des Pigmentes im Beton fördernden Bindemittel(n) bestehen. Als Bindemittel, die in Beton als Dispergierhilfsmittel arbeiten, werden genannt: Alkylbenzolsulfonat, Alkylnaphthalinsulfonat, Ligninsulfonat, sulfatierte Polyglykolether, Melaminformaldehydkondensate, Naphthalinformaldehydkondensate, Glukonsäure, Salze von niedriegmolekularen teilveresterten Styrol-Maleinsäureanhydrid-Copolymerisaten und Copolymere aus Vinylacetat und Krotonsäure. Der Anteil im Pigment soll bevorzugt 2 bis 6 Gew.-% betragen.

Die genannten Dispergierhilfsmittel wirken in Betonmischungen als Verflüssiger. Sie beeinflussen das Wasser-Zement-Verhältnis und wirken sich auf die Betonkonsistenz aus.

Im anorganischen Pigment selbst stellen die zugesetzten Bindemittel als organische Substanzen Fremdkörper dar. Gemäß der DE-A 2 940 156 weist das anorganische Ausgangspigment einen Harzgehalt von mindestens 20 % auf. Eine Zerteilung entsprechender Granulate im Beton wird durch die Harzanteile hydrophob eingestellter Agglomerate sehr erschwert.

Nach der DE-C 3 918 694 lassen sich fließfähige und wenig staubende Pigmente herstellen, doch bleiben durch den großen Anteil von Teilchen kleiner 100 um Unzulänglichkeiten bezüglich des Fließverhaltens und des Staubens.

Die Aufgabe der vorliegenden Erfindung besteht nun darin, zum Einfärben von Baustoffen gut fließende, nicht staubende anorganische Pigmentgranulate zur Verfügung zu stellen, die die beschriebenen Nachteile des Standes der Technik nicht aufweisen.

Diese Aufgabe wurde gelöst durch ein Verfahren zur Einfärbung von Baustoffen mit anorganischen Pigmenten in Form von gut fließenden und nicht staubenden Granulaten, wobei die Pigmentgranulate aus sprühgetrockneten Granalien hergestellt werden, indem diese einige Zeit nachgranuliert werden.

Dieses Verfahren ist Gegenstand der vorliegenden Erfindung. Als Granulat für das erfindungsgemäße Verfahren und insbesondere die gemäß der DE-C 3 918 694 hergestellten geeignet.

Besonders gute Ergebnisse werden dann erreicht, wenn das Nachgranulieren 5 Minuten bis 10 Stunden, vorzugsweise 15 Minuten bis 2 Stunden, durchgeführt wird.

Überraschenderweise zerfallen die Granalien unter diesen Bedingungen nicht, sondern der Feinanteil kleiner 100 µm wird geringer und der Anteil größer 100 µm vermehrt sich.

Das erfindungsgemäß Verfahren kann vorteilhaft bei einer Temperatur von Umgebungstemperatur bis zu 300°C durchgeführt werden. Das Nachgranulieren wird dabei bevorzugt in Trommeln, Schnecken, Drehtellern oder ähnlichen Aggregaten durchgeführt. Nach dem Nachgranulieren erhält man sehr gut fließfähige Granalien, die zudem deutlich weniger stauben als die eingesetzten Granalien.

Eine Ausführungsform des erfindungsgemäßen Verfahrens besteht darin, daß das Nachgranulieren ohne jeden Zusatz durchgeführt wird. Unter bestimmten Vorausetzungen kann der durch das erfindungsgemäße Verfahren erzielt Effekt unterstützt werden, wenn während des Nachgranulierens wenige Prozent Wasser über die Granalien gedüst werden.

In einer weiteren Ausführungsform des erfindungsgemäßen Verfahrens werden also die Granalien während des Nachgranulierens mit 0,5 bis 5 Gew.-%, vorzugsweise 1 bis 3 Gew.-%, bezogen auf die Pigmenten besprüht.

Er kann ebenso vorteilhaft sein, wenn die Granalien während des Nachgranulierens mit 0,5 bis 5 Gew.-%, bevorzugt 1 bis 3 Gew.-%, wäßrigen Salzlösungen des Bors, Aluminiums, Siliciums, Titans, Zinks und/oder Zinns, bezogen auf die Pigmente, besprüht werden. Hierdurch kann eine weitere Reduzierung des Feinanteils kleiner 100 µm erreicht werden.

Als angeorganische Pigmente sind besonders eines oder mehrere aus der Gruppe Titandioxd, Eisenoxid, Chromoxid, Manganoxid und Zinkoxid geeignet. Besonders bevorzugt sind dabei Eisenoxidpigmente.

Eine weitere Ausführungsform des erfindungsgemäßen Verfahrens besteht darin, daß die anorganischen Pigmente Mischphasenpigmente sind, die wenigstes zwei der Kationen des Chroms, Mangans, Eisen, Kobalts, Nickels, Zinks, Titans, Kupfers, Aluminiums, Arsens und Antimons sowie Sauerstoff als Gegenion enthalten.

Es hat sich gezeigt, daß die erfindungsgemäßen Granulate eine vom Pigment abhängige Partikelgröße nicht überschreiten sollten. Dies ist in erster Linie abhängig vom Schüttgewicht des Granulates, das wiederum ein Maß für die Porosität der Partikel darstellt. Die Porosität wiederum ist im Falle der Sprühgranulation abhängig vom Feststoffgehalt der pumpfähigen Ausgangssuspension vor dem Trocknen, die in Abhängigkeit von Teilchengröße und Teilchenform des Pigments stark schwanken kann. Als Maß für das Schüttgewicht dient das in der DIN 53 194 vom August 1957 definierte Stampfvolumen bzw. Stampfgewicht. Die erfindungsgemäßen Pigmentgranulate zeichnen sich dadurch aus, daß sie bei der Bestimmung des Stampfgewichtes nicht zerfallen. Bevorzugt weisen die erfindungsgemäßen Granulate ein Stampfgewicht zwischen 0,5 und 2,5 g/cm³, besonders bevorzugt 0,8 bis 1,5 g/cm³, auf.

Die für das erfindungsgemäße Verfahren besonders geeigneten Granulate liegen in ihrer durchschnittlichen Partikelgröße zwischen 100 und 500 µm.

Die Pigmentgranulate dieser Partikelgröße stellen handhabungsstabile, nicht staubende, gut rieselfähige Pulver dar, die für die Einfärbung von Baustoffen gut geeignet sind. Im Gegensatz zur bisherigen Meinung (DE-C 3 619 3639) reichen die Scherkräfte in Betonzubereitungen auf die Granulate für die vollständige Pigmentdispergierung während des Mischzyklus aus.

Besonders gute Ergebnisse werden mit Eisenoxid-Pigmenten erzielt.

Das Stampfgewicht der Granulate kann je nach Pigment, Zusatzart und -menge und Wassergehalt der Suspension schwanken. Niedrige Stampfgewichte führen zu wenig stabilen Granulaten, hohe Stampfgewichte zu schlechter Dispergierbarkeit. Die erfindungsgemäßen Eisenoxidschwarzgranulate weisen bevorzugt Stampfgewichte zwischen 0,8 und 1,4 g/cm³, auf.

Das erfindungsgemäße Verfahren soll an folgenden Beispielen näher erläutert werden; es ist darin jedoch keine Einschränkung auf die Beispiele zu sehen.

Die Prüfung der Dispergierbarkeit in Beton erfolgte über die Farbstärkemessung an mit Weißzement hergestellten Prismen bei folgenden Daten: Zement-Quarzsand-Verhältnis 1:4, Wasser-Zement-Wert 0,35, Pigmentierungshöhe 1,2 %, bezogen auf Zement, verwendeter Mischer von RK Toni Technik, Berlin, mit 5 l Mischschüssel, Bauform 1551, Drehzahl 140 U/min (Ansatz: 500 g Zement). Nach je 30, 40, 50, 60, 70 und 80 s wurden 4 Mischungsproben (300 g) entnommen und Probekörper (5 x 10 x 2,5 cm) unter Druck (32,5 N/mm²) hergestellt. Härtung der Probekörper: 24 Std. bei 30°C und 95 % rel. Luftfeuchte mit anschließendem Trocknen 24 Stunden bei 50°C. Farbdatenmessung über Hunterlab-Gerät: 3 Meßpunkte je Ober- und Unterseite, pro Pigmentmischung 24 Meßpunkte. Die erhaltenen Mittelwerte werden in bezug zu der Probe mit 80 s Mischzeit (Endfarbstärke = 100 %) gesetzt.

### Beispiele

### Beispiel 1

Eine wässerige Suspension mit ca. 50 Gew.-% Fe₃O₄ (Bayferrox® 318, Handelsprodukt der Bayer AG) und 1 Gew.-% Natronwasserglaslösung mit 360 g/l SiO₂, bezogen auf den Feststoff, gelangte mit einem Druck von 0,5 bar auf die Verteilerscheibe eines Scheibensprühtrockners. Die Umfangsgeschwindigkeit der Scheibe betrug 88 m/s. Vom Erdgas-Flächenbrenner traten die Verbrennungsgase mit einer Temperatur von 380°C in den Sprühtrockner. Die Austrittstemperatur der Gase lag bei 75°C. Es wurden stündlich 90 kg Eisenoxidschwarzgranalien erhalten mit einer Restfeuchte von 3.5 Gew.-%. Das Stampfgewicht der Granalien betrug 1, 14 g/cm³. Die Siebanalyse der Granalien ergibt, daß 23,7 % kleiner 100 µm und 76,3 nur größer 100 µm sind.

Die so erhaltenen Granalien wurden weitergerollt, im vorliegenden Beispiel wurde eine Drageetrommel verwendet mit einem Durchmesser von 80 cm, einem Neigungswinkel von 45°C und einer Drehzahl von 25 Upm. Man erhielt nach 60° Minuten Granalien mit einem guten Fließverhalten, die in der Siebanalyse nur noch 14 % kleiner 100 µm aufweisen. Die Stampfdichte beträgt 1,18 g/cm³. Die Endfarbstärke bei der Dispergierbarkeitsprüfung in Betonprismen wird nach 50 Sekunden erreicht.

### Beispiel 2

Die Granalien aus Beispiel 1 mit 23,7 % kleiner 100 µm wurden wie in Beispiel 1 in der Drageetrommel 1 h nachgerollt, zusätzlich wurden während dieser Zeit 2 Gew.-% Wasser, bezogen auf den Feststoff, aufgedüst.

Man erhält Granalien mit nur noch 4,5 % kleiner 100 µm. Die Stampfdichte beträgt 1,22 g/cm³. Das Fließverhalten ist sehr gut und das Stauben ist äußerst gering. Die Endfarbstärke bei der Dispergierbarkeitsprüfung in Beton prismen wird nach 40 Sekunden erreicht.

### Beispiel 3

Eine wässrige Suspension mit einem Feststoffgehalt von 55 Gew.-% Eisenoxidrot (Bayferrox® 130, Handelsprodukt der Bayer AG) gelangte mit einem Vorderdruck von 0,3 bar auf die Verteilerscheibe eines Scheibensprühtrockners. Die Umfangsgeschwindigkeit der Scheibe betrug 75 m/s. Vom Erdgasflächenbrenner traten die Verbrennungsgase mit einer Temperatur von 400°C in den Sprühtrockner. Die Austrittstemperatur lag bei 160°C. Es wurden stündlich 125 kg Eisenoxidrotgranalien mit einer Restfeuchte von 0,3 Gew.-% erhalten. Die Stampfdichte liegt bei 1,48 g/cm³. Die Siebanalyse ergab aber, daß 24,8 % der Granalien kleiner 100 µm waren.

Diese Granalien wurden, wie in Beispiel 1 beschrieben, 30 Minuten nachgerollt. Dabei reduzierte sich der Anteil kleiner 100 µm auf 13 %. Das Fließverhalten ist sehr gut und das Staubverhalten sehr gering. Die Endfarbstärke bei der Prüfung der Dispergierbarkeit in Betonprismen wird nach 70 Sekunden erreicht. Die Stampfdichte liegt bei 1,40 g/cm³.

### Beispiel 4

Die Granalien aus Beispiel 3 wurden während des Nachrollens mit 1 Gew.-% Wasser besprüht. Man erhält nach 1 h Granalien mit einem Anteil kleiner 100 µm von 10 %. Das Fließ- und Staubverhalten ist sehr gut. Bei der Dispergierbarkeitsprüfung in Betonprismen wird nach 60 Sekunden die Endfarbstärke erreicht. Die Stampfdichte liegt bei 1,41 g/cm³.

### Beispiel 5

Wie in den Beispiel 1 und 3 beschrieben, wurden Eisenoxidgelbgranalien hergestellt (Bayferrox® 420, Handelsprodukt der Bayer AG). Die Stampfdichte beträgt 0,92 g/cm³, und die Restfeuchte liegt bei 0,3 Gew.-%. Die Siebanalyse ergibt, daß 87,5 Gew.-% größer 100 µm sind. Die so erhaltenen Granalien werden 30 Minuten in einem Drehrohr bei 190°C und einer Umfangsgeschwindigkeit von 4 Upm gehalten. Es werden Granalien mit 98,8 Gew.-% größer 100 µm erhalten. Die Stampfdichte liegt bei 0,96 g/cm³.

Die Endfarbstärke bei der Dispergierbarkeitsprüfung in Betonprismen ist nach 50 Sekunden erreicht.

## Patentansprüche

1. Verfahren zum Einfärben von Baustoffen mit anorganischen Pigmenten in Form von gut fließenden und nicht staubenden Granulaten, dadurch gekennzeichnet, daß die Pigmentgranulate aus sprühgetrockneten Granalien hergestellt werden, indem diese einige Zeit nachgranuliert werden.

2. Verfahren gemäß Anspruch 1, dadurch gekennzeichnet, daß das Nachgranulieren 5 Minuten bis 10 Stunden, vorzugsweise 15 Minuten bis 2 Stunden, durchgeführt wird.

3. Verfahren gemäß einem der Ansprüche 1 oder 2, dadurch gekennzeichnet, daß das Nachgranulieren bei einer Temperatur von Umgebungstemperatur bis zu 300°C durchgeführt wird.

4. Verfahren gemäß einen oder mehreren der Ansprüche 1 bis 3, dadurch gekennzeichnet, daß das Nachgranulieren in Trommeln, Schnecken, Drehtellern oder ähnlichen Aggregaten durchgeführt wird.

5. Verfahren gemäß einem oder mehreren der Ansprüche 1 bis 4, dadurch gekennzeichnet, daß das Nachgranulieren ohne jeden Zusatz durchgeführt wird.

6. Verfahren gemäß einem oder mehreren der Ansprüche 1 bis 4, dadurch gekennzeichnet, daß die Granalien während des Nachgranulierens mit 0,5 bis 5 Gew.-%, vorzugsweise 1 bis 3 Gew.-%, Wasser, bezogen auf die Pigmente, besprüht werden.

7. Verfahren gemäß einem oder mehreren der Ansprüche 1 bis 4, dadurch gekennzeichnet, daß die Granalien während des Nachgranulierens mit 0,5 bis 5 Gew.-%, bevorzugt 1 bis 3 Gew.-%, wäßrigen Salzlösungen des Bors, Aluminiums, Siliciums, Titans, Zinks und/oder Zinns, bezogen auf die Pigmente, besprüht werden.

8. Verfahren gemäß einen oder mehreren der Ansprüche 1 bis 7, dadurch gekennzeichnet, daß die anorganischen Pigmente eines oder mehrere aus der Gruppe Titandioxd, Eisenoxid, Chromoxid, Manganoxid und Zinkoxid sind.

9. Verfahren gemäß Anspruch 8, dadurch gekennzeichnet, daß die anorganischen Pigmente Eisenoxidpigmente sind.

10. Verfahren gemäß einen oder mehreren der Ansprüche 1 bis 7, dadurch gekennzeichnet, daß die anorganischen Pigmente Mischphasenpigmente sind, die wenigstens zwei der Kationen des Chroms, Mangans, Eisens, Kobalts, Nickels, Zinks, Titans, Kupfers, Aluminiums, Arsens und Antimons sowie Sauerstoff als Gegenion enthalten.

## Claims

1. Process for colouring building materials by means of inorganic pigments in the form of granular materials which have good flow properties and do not form dust, characterised in that the granular pigments are prepared from spray-dried granules by further granulating the latter for some time.

2. Process according to claim 1, characterised in that the further granulation is carried out for 5 minutes to 10 hours, preferably 15 minutes to 2 hours.

3. Process according to one of claims 1 or 2, characterised in that the further granulation is carried out at a temperature of from ambient temperature up to 300°C.

4. Process according to one or more of claims 1 to 3, characterised in that the further granulation is carried out in drums, screw-type apparatus, on rotary tables or in similar units.

5. Process according to one or more of claims 1 to 4, characterised in that the further granulation is carried out without any additive.

6. Process according to one or more of claims 1 to 4, characterised in that during the further granulation the granules are sprayed with from 0.5 to 5% by weight, preferably from 1 to 3% by weight, of water, referred to the pigments.

7. Process according to one or more of claims 1 to 4, characterised in that during the further granulation the granules are sprayed with from 0.5 to 5% by weight, preferably from 1 to 3% by weight of aqueous solutions of salts of boron, aluminium, silicon, titanium, zinc and/or tin, referred to the pigments.

8. Process according to one or more of claims 1 to 7, characterised in that the inorganic pigments are one or more from the group titanium dioxide, iron oxide, chromium oxide, manganese oxide and zinc oxide.

9. Process according to claim 8, characterised in that the inorganic pigments are iron oxide pigments.

10. Process according to one or more of claims 1 to 7, characterised in that the inorganic pigments are mixed phase pigments which contain at least two of the cations of chromium, manganese, iron, cobalt, nickel, zinc, titanium, copper, aluminium, arsenic and antimony as well as oxygen as the counterion.

## Revendications

1. Procédé pour colorer des matériaux de construction par des pigments minéraux à l'état de granulés qui s'écoulent bien et ne forment pas de poussières, caractérisé en ce que l'on prépare ces granulés de pigments à partir de granules eux-mêmes obtenus par séchage-atomisation et qu'on soumet à une opération de remise à l'état de granulés pendant quelque temps.

2. Procédé selon la revendication 1, caractérisé en ce que l'opération de remise à l'état de granulés dure de 5 min à 10 h, de préférence de 15 min à 2 h.

3. Procédé selon l'une des revendications 1 ou 2, caractérisé en ce que l'opération de remise à l'état de granulés est effectuée à une température environnante allant jusqu'à 300°C.

4. Procédé selon une ou plusieurs des revendications 1 à 3, caractérisé en ce que l'opération de remise à l'état de granulés est réalisée dans des tambours, des vis, des plateaux rotatifs ou des appareils analogues.

5. Procédé selon une ou plusieurs des revendications 1 à 4, caractérisé en ce que l'opération de remise à l'état de granulés est réalisée en l'absence de tout additif.

6. Procédé selon une ou plusieurs des revendications 1 à 4, caractérisé en ce que, durant l'opération de remise à l'état de granulés, on pulvérise sur les granules de 0,5 à 5 % en poids, de préférence de 1 à 3 % en poids d'eau par rapport aux pigments.

7. Procédé selon une ou plusieurs des revendications 1 à 4, caractérisé en ce que, au cours de l'opération de remise à l'état de granulés, on pulvérise sur les granules de 0,5 à 5 % en poids, de préférence de 1 à 3 % en poids de solutions aqueuses de sels du bore, de l'aluminium, du silicium, du titane, du zinc et/ou de l'étain, par rapport au pigment.

8. Procédé selon une ou plusieurs des revendications 1 à 7, caractérisé en ce que les pigments minéraux sont choisis dans le groupe formé par le dioxyde de titane, l'oxyde de fer, l'oxyde de chrome, l'oxyde de manganèse et l'oxyde de zinc et sont mis en oeuvre isolément où à l'état de mélanges.

9. Procédé selon la revendication 8, caractérisé en ce que les pigments minéraux sont des pigments d'oxyde de fer.

10. Procédé selon une ou plusieurs des revendications 1 à 7, caractérisé en ce que les pigments minéraux sont des pigments à phases mélangées contenant au moins deux des cations du chrome, du manganèse, du fer, du cobalt, du nickel, du zinc, du titane, du cuivre, de l'aluminium, de l'arsenic et de l'antimoine, avec de l'oxygène en tant qu'ion complémentaire.
